(19) **Europäisches Patentamt / European Patent Office / Office européen des brevets**

(11) **EP 3 067 408 B1**

(12) **EUROPEAN PATENT SPECIFICATION**

(45) Date of publication and mention
of the grant of the patent:
**29.03.2017 Bulletin 2017/13**

(21) Application number: **16159753.9**

(22) Date of filing: **10.03.2016**

(51) Int Cl.:
*C10M 141/10* *(2006.01)*  *C10M 141/12* *(2006.01)*
*C10M 169/04* *(2006.01)*  *C10N 20/02* *(2006.01)*
*C10N 30/04* *(2006.01)*  *C10N 30/06* *(2006.01)*
*C10N 40/04* *(2006.01)*

(54) **LUBRICANT COMPOSITION FOR AUTOMATIC TRANSMISSIONS**

SCHMIERMITTELZUSAMMENSETZUNG FUR AUTOMATIK GETRIEBE

COMPOSITIONS LUBRIFIANTES POUR TRANSMISSIONS AUTOMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2015 US 201514656008
22.04.2015 US 201562151143 P**

(43) Date of publication of application:
**14.09.2016 Bulletin 2016/37**

(73) Proprietor: **Afton Chemical Corporation
Richmond, Virginia 23219 (US)**

(72) Inventor: **Tang, Tom Hong-Zhi
Glen Allen, 23059 (US)**

(74) Representative: **Dunleavy, Kevin James
Mendelsohn Dunleavy, P.C.
p/o De Vries & Metman
Overschiestraat 180
1062 XK Amsterdam (NL)**

(56) References cited:
EP-A1- 1 233 054   EP-A2- 1 529 831
US-A1- 2009 233 822   US-A1- 2009 233 823

**Description**

FIELD

The disclosure generally relates to automatic transmission lubricants, methods of using such lubricants, and transmissions with a wet-clutch friction disk including the lubricants. More particularly, the disclosure relates to use of select boronated and phosphorylated dispersants in transmission lubricant compositions with a minimum level of dynamic friction, good anti-shudder durability, and acceptable wear rates.

BACKGROUND

The continuing pursuit of more fuel efficient vehicles is requiring automatic transmissions to be more robust and energy efficient. There are a number of types of automatic transmission including stepped automatic transmissions, automated manual transmissions, continuously variable transmissions and dual clutch transmissions. Each type of automatic transmission offers some advantages over the others when used in vehicles; however, the ability to reduce size and weight while maintaining desired transmission characteristics provides a benefit regardless of type. In any automatic transmission where a fluid lubricated clutch is used (e.g. stepped automatic transmissions, continuously variable transmissions and dual clutch transmissions), increasing the friction level in the clutch has the desirable effect of increasing the level of torque that can be transferred through the clutch which, in turn, requires less surface area to transmit the same amount of torque.

However, different transmissions tend to have differing demands on a lubricant for optimal performance. For example, gear oil often requires good extreme pressure and load-bearing properties, generally low boundary friction and low thin film friction. On the other hand, a lubricant for continuously variable transmissions (CVT) tends to require low boundary friction and high thin film friction. Automatic transmissions with wet clutches, in contrast, usually require high boundary friction for an optimal torque transfer and low thin film friction to efficiently pump fluid through the transmission.

In many instances, a particular focus of automatic transmission fluids (ATF) is the minimization of shudder (that is, anti-shudder properties), which is believed to be a function of the change of friction coefficient with time ($d\mu/dt<0$). Furthermore, shift characteristics of automatic transmissions are primarily dependent on the frictional characteristics of the ATF. The ATF fluid typically needs to have a certain level of frictional performance, good anti-shudder durability, and acceptable anti-wear characteristics. These characteristics are often a challenge to balance with the requirement that today's ATF lubricant compositions also need to maximize service intervals, or even better, avoid oil service during the lifetime of the equipment. This is referred to in the industry as a lifetime fill or "fill-for-life" fluid. Therefore, maintenance of the friction properties of an ATF over time, i.e. friction durability, may also be a desired property of the fluid.

Several prior efforts at improving the friction properties of ATF fluids have been attempted, but many involve the addition of or increased levels of lubricant components such as friction modifiers, oxidization modifiers, and/or viscosity modifiers. The addition of or increased levels of components escalates manufacturing complexity and increases product costs. Moreover, adding or increasing the level of friction modifiers in the context of automatic transmission fluids may be undesired because it may compromise other important fluid characteristics. For instance, added or increased levels of friction and/or viscosity modifiers tend to reduce static friction to levels resulting in an unacceptable loss of torque transmission, which can be undesirable in automatic transmissions, such as those including wet-clutch friction disks.

SUMMARY

The present disclosure describes a transmission lubricant composition, a method of lubricating a transmission using such a transmission lubricant composition, and a transmission including the transmission lubricant composition. The lubricant composition has a certain minimum level of dynamic friction, good anti-shudder durability, and acceptable wear rates when employed in automatic transmissions, such as a dual-clutch transmission.

In one aspect or embodiment of the present disclosure, the transmission lubricant composition includes a major amount of a base or lubricating oil, a boronated and phosphorylated N-substituted polyisobutylene succinimide dispersant, and a metal-containing detergent. The lubricant composition contains 4.5 to 25 weight percent of the boronated and phosphorylated N-substituted polyisobutylene succinimide dispersant.

The polyisobutylene group of the boronated and phosphorylated N-substituted polyisobutylene succinimide dispersant has a number average molecular weight of greater than 1300 up to 2300 as determined by gel permeation chromatography using polystyrene as the reference. In one embodiment, the polyisobutylene used to make the boronated and phosphorylated N-substituted polyisobutylene succinimide dispersant has a viscosity at 100°C of 2100 cSt to 2700 cSt. The dispersant has a ratio of boron to phosphorus of 0.21 to 0.46, and a ratio of boron to nitrogen of 0.09 to 0.19.

The metal-containing detergent is used in an amount that provides less than 455 ppm of metal to the lubricant composition and delivers a soap content of 0.02 to 0.15 weight percent to the lubricant composition. The lubricant composition contains from 44 to 371 ppm boron. As discussed further herein and in the Examples, this lubricant composition unexpectedly provides a robust lubricant that exhibits a combination of anti-shudder durability, a minimum level of dynamic friction and acceptable wear rates while including conventional levels of friction and viscosity modifiers in the lubricant composition.

In other aspects or embodiments, which can be combined with those of the previous paragraph, the transmission lubricant composition has a Brookfield viscosity at -40°C of not more than 15,000 cP; the lubricating oil is selected from mineral oils and synthetic oils; the major amount of a lubricating oil is selected from the group consisting of a Group II base oil, a Group III base oil and/or a Group IV base oil as well as mixtures thereof; the transmission lubricant composition includes about 4.5 to about 12 weight percent of the boronated and phosphorylated N-substituted polyisobutylene succinimide dispersant or 4.5 to 7.7 weight percent; the detergent is a neutral to overbased sulfonate, phenate, or carboxylate that is an alkali metal or alkaline earth metal salt; the detergent is a linear or branched sulfonate; the metal-containing detergent provides more than 0 to 281 ppm of the metal to the lubricant composition; the lubricant composition includes 0.08 to 1 weight percent of the metal-containing detergent; and/or the metal-containing detergent is not boronated.

In yet other aspects or embodiments, which can be combined with any of those in the two previous paragraphs, the transmission lubricant composition further includes at least one component selected from a friction modifier, an air expulsion additive, an antioxidant, a corrosion inhibitor, a foam inhibitor, a seal-swell agent, a viscosity index improver, an anti-rust agent, an extreme pressure additive, and mixtures thereof.

The present disclosure also describes a method of lubricating a transmission by supplying thereto a lubricant composition including a mixture of a major amount of a lubricating oil and 4.5 to 25 weight percent of a boronated and phosphorylated N-substituted polyisobutylene succinimide dispersant having a number average molecular weight of the polyisobutylene greater than 1300 up to 2300 as determined by gel permeation chromatography using polystyrene as the reference. In one embodiment the polyisobutylene used to make the dispersant has a viscosity at 100°C of 2100 to 2700 cST. The dispersant also has a ratio of boron to phosphorus of 0.21 to 0.46, and a ratio of boron to nitrogen of 0.09 to 0.19. The lubricant composition also includes an amount of a metal-containing detergent providing less than 455 ppm of a metal to the lubricant composition and delivering a soap content of 0.02 to 0.15 weight percent to the lubricant composition. The lubricant composition contains from 44 to 371 ppm boron. In other aspects or embodiments of the methods herein, which can be combined with those of the previous paragraph, the lubricant used in the method has a Brookfield viscosity at -40°C of not more than 15,000 cP; the lubricating oil is selected from mineral oils and synthetic oils; the major amount of a lubricating oil is selected from the group consisting of a Group II base oil, a Group III base oil and/or a Group IV base oil as well as mixtures thereof; the transmission lubricant composition includes about 4.5 to about 12 weight percent of the boronated and phosphorylated N-substituted polyisobutylene succinimide dispersant or 4.5 to 7.7 weight percent; the detergent is a neutral to overbased sulfonate, phenate, or carboxylate that is an alkali metal or alkaline earth metal salt; the detergent is a linear or branched sulfonate; the metal-containing detergent includes more than 0 to 281 ppm of the metal; the lubricant composition includes 0.08 to 1 weight percent of the metal-containing detergent; and/or the metal-containing detergent is not boronated.

In yet other aspects or embodiments of the methods herein, which can be combined with any of those in the two previous paragraphs, the lubricant used in the methods may further include at least one component selected from a friction modifier, an air expulsion additive, an antioxidant, a corrosion inhibitor, a foam inhibitor, a seal-swell agent, a viscosity index improver, an anti-rust agent, an extreme pressure additive, and mixtures thereof.

The present disclosure also describes a transmission including a wet-clutch friction disk and a lubricating composition. The lubricating composition includes a major amount of a lubricating oil and 4.5 to 25 weight percent of a boronated and phosphorylated N-substituted polyisobutylene succinimide dispersant having a number average molecular weight of the polyisobutylene greater than 1300 up to 2300 as determined by gel permeation chromatography using polystyrene as the reference. In one embodiment, the polyisobutylene used to make the dispersant has a viscosity at 100°C of 2100 to 2700 cST. The dispersant also has a ratio of boron to phosphorus of 0.21 to 0.46, and a ratio of boron to nitrogen of 0.09 to 0.19. The lubricant of the transmission also includes an amount of a metal-containing detergent providing less than 455 ppm of a metal to the lubricant composition and delivering a soap content of 0.02 to 0.15 weight percent to the lubricant composition. The lubricant composition contains from 44 to 371 ppm boron,

In other aspects or embodiments of the transmission, which can be combined with those of the previous paragraph, the lubricant used in the transmission has a Brookfield viscosity at -40°C of not more than 15,000 cP; the lubricating oil is selected from mineral oils and synthetic oils; the major amount of a lubricating oil is selected from the group consisting of a Group II base oil, a Group III base oil and/or a Group IV base oil as well as mixtures thereof; the transmission lubricant composition includes about 4.5 to about 12 weight percent of the boronated and phosphorylated N-substituted polyisobutylene succinimide dispersant or 4.5 to 7.7 weight percent; the detergent is a neutral to overbased sulfonate, phenate, or carboxylate that is an alkali metal or alkaline earth metal salt; the detergent is a linear or branched sulfonate; the metal-containing detergent includes more than 0 to 281 ppm of the metal; the lubricant composition includes 0.08 to 1 weight percent of the metal-containing detergent; and/or the metal-containing detergent is not boronated.

In yet other aspects or embodiments of the transmission, which can be combined with any of those in the two previous paragraphs, the lubricant used in the transmission may further include at least one component selected from a friction modifier, an air expulsion additive, an antioxidant, a corrosion inhibitor, a foam inhibitor, a seal-swell agent, a viscosity index improver, an anti-rust agent, an extreme pressure additive, and mixtures thereof.

The transmission described in the previous paragraphs may be a dual-clutch transmission.

BRIEF DESCRIPTION OF THE DRAWING

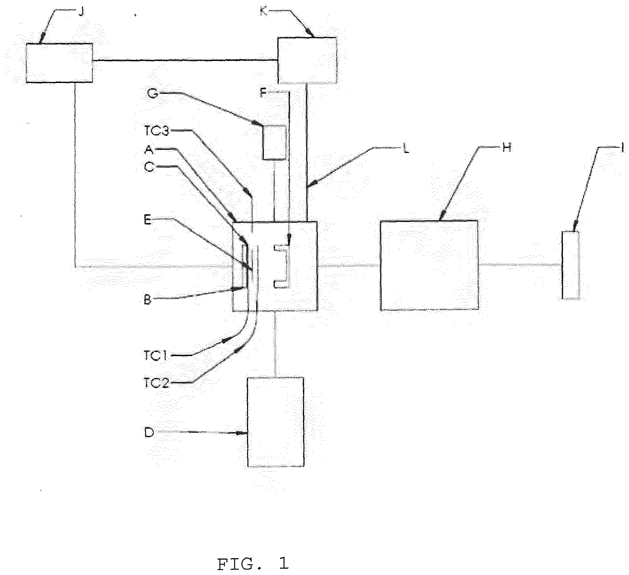

FIG. 1 is a schematic of an exemplary test rig for evaluating friction properties of the lubricants described herein.

DETAILED DESCRIPTION

Transmission lubricants are described that provide improved friction properties such as anti-shudder durability over the life of the fluid. The lubricants are particularly suited for automatic transmissions, such as but not limited to, dual clutch transmissions with a wet-clutch friction disk. The lubricants herein provide a combination of a minimum level of dynamic friction, good anti-shudder durability, and acceptable anti-wear performance. Such results were obtained not by increasing the levels of friction or viscosity modifiers, but by identification of a select set of lubricant dispersant and detergent parameters that were not previously expected to affect friction properties in such a way within transmission lubricants. Friction properties can be measured using a SAE #2 test rig. Anti-wear properties can be measured using standard FZG anti-wear tests as described more fully herein.

In one aspect, the lubricants include a major amount of a base or lubricating oil(s), one or more boronated and phosphorylated N-substituted polyisobutylene succinimide dispersant(s), and one or more metal-containing detergent(s). It was discovered that to achieve a combination of a minimum dynamic friction, desired anti-shudder durability, and good anti-wear performance, can be attained by by controlling certain parameters of the dispersant and the detergent.. For example, the dispersant is a boronated and phosphorylated N-substituted polyisobutylene (PIB) succinimide dispersant having a treat rate in the lubricant of 4.5 to 25 weight percent with specific parameters of the PIB substituent and select relationships of the nitrogen, boron, and phosphorous. For instance, the PIB substituent has a number average molecular weight greater than 1300 up to 2300 as determined by gel permeation chromatography using polystyrene as the reference. The PIB used to make the dispersant may have a viscosity of the PIB at 100°C of 2100 to 2700 cSt. The lubricating oil has from 44 to 371 ppm boron. The dispersant has a ratio of boron to phosphorus of 0.21 to 0.46, and a ratio of boron to nitrogen of 0.09 to 0.19. Not only are these select characteristics of the dispersant important, but the amount of the detergent used in the composition should provide less than 455 ppm of metal and deliver a soap content to the lubricant of 0.02 to 0.15 weight percent in order to achieve the desired results. This combination of features of the dispersant and detergent provide a composition with a good combination of dynamic friction, anti-shudder durability and anti-wear properties. It was unexpected that the dispersant and detergent selection would be important to these performance characteristics of the transmission lubrication fluid.

As used herein, the terms "oil composition," "lubrication composition," "lubricating oil composition," "lubricating oil," "lubricant composition," "fully formulated lubricant composition," and "lubricant" are considered synonymous, fully interchangeable terminology referring to the finished lubrication product comprising a major amount of a base or lubricating oil plus minor amounts of the select dispersants and detergents noted herein. The lubricant may also include optional additives as further described below. In some approaches, the Brookfield viscosity at -40°C for these lubricant compositions is typically not more than 15,000 cP and, in some approaches, between 8,000 and 15,000 cP, each as measured according to ASTM-2983. In other approaches, a kinematic viscosity at 100°C for these lubricants ranges from about 5.9 to about 7.0 cSt as determined using ASTM D445. The lubricants herein containing about 4.5 to about 12 percent dispersant may exhibit such Brookfield and kinematic viscosities. In other instances, with higher treat rates of the disclosed dispersant (e.g., 20 to 25 percent or 23 to 25 percent), the Brookfield viscosity at -40°C may approach 72,500 cP and the kinematic viscosity at 100°C may approach about 14 cSt as determined using ASTM D445.

The term "TBN" as employed herein is used to denote the Total Base Number in mg KOH/g as measured by the method of ASTM D2896 or ASTM D4739.

Base or Lubricating Oil

As used herein, the term "base oil" or "lubricating oil" generally refers to oils categorized by the American Petroleum Institute (API) category groups Group I-V oils as well as animal oils, vegetable oils (e.g. castor oil and lard oil), petroleum oils, mineral oils, synthetic oils, and oils derived from coal or shale. The American Petroleum Institute has categorized these different basestock types as follows: Group I, greater than 0.03 wt percent sulfur, and/or less than 90 vol percent saturates, viscosity index between 80 and 120; Group II, less than or equal to 0.03 wt percent sulfur, and greater than or equal to 90 vol percent saturates, viscosity index between 80 and 120; Group III, less than or equal to 0.03 wt percent sulfur, and greater than or equal to 90 vol percent saturates, viscosity index greater than 120; Group IV, all polyalphaolefins. Hydrotreated basestocks and catalytically dewaxed basestocks, because of their low sulfur and aromatics content, generally fall into the Group II and Group III categories. Polyalphaolefins (Group IV basestocks) are synthetic base oils prepared from various alpha olefins and are substantially free of sulfur and aromatics.

Groups I, II, and III are mineral oil process stocks. Group IV base oils contain true synthetic molecular species, which are produced by polymerization of olefinically unsaturated hydrocarbons. Many Group V base oils are also true synthetic products and may include diesters, polyol esters, polyalkylene glycols, alkylated aromatics, polyphosphate esters, polyvinyl ethers, and/or polyphenyl ethers, and the like, but may also be naturally occurring oils, such as vegetable oils. It should be noted that although Group III base oils are derived from mineral oil, the rigorous processing that these fluids undergo causes their physical properties to be very similar to some true synthetics, such as PAOs. Therefore, oils derived from Group III base oils may sometimes be referred to as synthetic fluids in the industry.

The base oil used in the disclosed lubricating oil composition may be a mineral oil, animal oil, vegetable oil, synthetic oil, or mixtures thereof. Suitable oils may be derived from hydrocracking, hydrogenation, hydrofinishing, unrefined, refined, and re-refined oils, and mixtures thereof.

Unrefined oils are those derived from a natural, mineral, or synthetic source with or without little further purification treatment. Refined oils are similar to unrefined oils except that they have been treated by one or more purification steps, which may result in the improvement of one or more properties. Examples of suitable purification techniques are solvent extraction, secondary distillation, acid or base extraction, filtration, percolation, and the like. Oils refined to the quality of an edible oil may or may not be useful. Edible oils may also be called white oils. In some embodiments, lubricant compositions are free of edible or white oils.

Re-refined oils are also known as reclaimed or reprocessed oils. These oils are obtained in a manner similar to that used to obtain refined oils using the same or similar processes. Often these oils are additionally processed by techniques directed to removal of spent additives and oil breakdown products.

Mineral oils may include oils obtained by drilling, or from plants and animals and mixtures thereof. For example such oils may include, but are not limited to, castor oil, lard oil, olive oil, peanut oil, corn oil, soybean oil, and linseed oil, as well as mineral lubricating oils, such as liquid petroleum oils and solvent-treated or acid-treated mineral lubricating oils of the paraffinic, naphthenic or mixed paraffinic-naphthenic types. Such oils may be partially or fully-hydrogenated, if desired. Oils derived from coal or shale may also be useful.

Useful synthetic lubricating oils may include hydrocarbon oils such as polymerized, oligomerized, or interpolymerized olefins (e.g., polybutylenes, polypropylenes, propyleneisobutylene copolymers); poly(1-hexenes), poly(1-octenes), trimers or oligomers of 1-decene, e.g., poly(1-decenes), such materials being often referred to as α-olefins, and mixtures thereof; alkyl-benzenes (e.g. dodecylbenzenes, tetradecylbenzenes, dinonylbenzenes, di-(2-ethylhexyl)-benzenes); polyphenyls (e.g., biphenyls, terphenyls, alkylated polyphenyls); diphenyl alkanes, alkylated diphenyl alkanes, alkylated diphenyl ethers and alkylated diphenyl sulfides and the derivatives, analogs and homologs thereof or mixtures thereof.

Other synthetic lubricating oils include polyol esters, diesters, liquid esters of phosphorus-containing acids (e.g., tricresyl phosphate, trioctyl phosphate, and the diethyl ester of decane phosphonic acid), or polymeric tetrahydrofurans. Synthetic oils may be produced by Fischer-Tropsch reactions and typically may be hydroisomerized Fischer-Tropsch hydrocarbons or waxes. In an embodiment, oils may be prepared by a Fischer-Tropsch gas-to-liquid synthetic procedure as well as from other gas-to-liquid oils.

The amount of the base or lubricating oil present may be the balance remaining after subtracting from 100 wt% the sum of the amounts of the specific dispersants and detergent noted herein as well as any further optional performance additives also noted herein. For example, the base or lubricating oil that may be present in a finished fluid may be a major amount, such as greater than about 50 wt.%, greater than about 60 wt.%, greater than about 70 wt.%, greater than about 80 wt.%, greater than about 85 wt.%, or greater than about 90 wt.%.

## Dispersant

The lubricant composition includes one or more select dispersants or mixtures thereof. Dispersants are often known as ashless-type dispersants because, prior to mixing in a lubricating oil composition, they do not contain ash-forming metals and they do not normally contribute any ash when added to a lubricant. Ashless-type dispersants are characterized by a polar group attached to a relatively high molecular weight hydrocarbon chain having, for example, a molecular weight of at least 1300. Specific ashless dispersants useful in the present disclosure include boronated and phosphorylated N-substituted long chain alkenyl succinimides.

The N-substituted long chain alkenyl succinimides include polyisobutylene (PIB) substituents with a number average molecular weight of the polyisobutylene substituent in a range of 1300 to 2300 as determined by gel permeation chromatography (GPC) using polystyrene (with a number average molecular weight of 180 to 18,000) as the calibration reference. The PIB used in the dispersant also has a viscosity at 100°C of 2100 to 2700 cSt as determined using ASTM D445. Succinimide dispersants and their preparation are disclosed, for instance in U.S. Pat. No. 7,897,696 and U.S. Pat. No. 4,234,435, which are incorporated herein by reference. Succinimide dispersants are typically an imide formed from a polyamine, typically a poly(ethyleneamine). The dispersants typically include two succinimide moieties joined by a polyamine. The polyamine may be tetraethylene pentaamine (TEPA), triethylene tetraamine (TETA), pentaethylene hexaamine (PEHA), other ethylene amine species containing more nitrogen atoms per molecule and/or mixtures thereof. The polyamines may be mixtures of linear, branched and cyclic amines. The PIB substituents may be joined to each succinimide moiety.

The N-substituted polyisobutylene succinimide dispersants herein are also boronated and phosphorylated in order to achieve the desired friction properties. These dispersants are generally the reaction products of i) at least one phosphorus compound and/or a boron compound and ii) at least one ashless dispersant. The boron and phosphorus needs to be provided in select amounts and within key ratios to each other and to the level of nitrogen in the dispersant to achieve the desired friction properties while using conventional levels of friction and/or viscosity modifiers. By one approach, the lubricating composition includes 44 to 371 ppm boron and the dispersant has a ratio of boron to phosphorus of 0.21 to 0.46, and a ratio of boron to nitrogen of 0.09 to 0.19. Deviation from these parameters results in one or more failures of the friction characteristics as discussed more in the Examples.

Suitable boron compounds useful in forming the dispersants herein include any boron compound or mixtures of boron compounds capable of introducing boron-containing species into the ashless dispersant. Any boron compound, organic or inorganic, capable of undergoing such reaction can be used. Accordingly, use can be made of boron oxide, boron oxide hydrate, boron trifluoride, boron tribromide, boron trichloride, $HBF_4$ boron acids such as boronic acid (e.g. alkyl-$B(OH)_2$ or aryl-$B(OH)_2$), boric acid, (i.e., $H_3BO_3$), tetraboric acid (i.e., $H_2B_5O_7$), metaboric acid (i.e., $HBO_2$), ammonium salts of such boron acids, and esters of such boron acids. The use of complexes of a boron trihalide with ethers, organic acids, inorganic acids, or hydrocarbons is a convenient means of introducing the boron reactant into the reaction mixture. Such complexes are known and are exemplified by boron trifluoride-diethyl ether, boron trifluoride-phenol, boron trifluoride-phosphoric acid, boron trichloride-chloroacetic acid, boron tribromide-dioxane, and boron trifluoride-methyl ethyl ether.

Suitable phosphorus compounds for forming the dispersants herein include phosphorus compounds or mixtures of phosphorus compounds capable of introducing a phosphorus-containing species into the ashless dispersant. Any phosphorus compound, organic or inorganic, capable of undergoing such reaction can thus be used. Accordingly, use can be made of such inorganic phosphorus compounds such as the inorganic phosphorus acids, and the inorganic phosphorus oxides, including their hydrates. Typical organic phosphorus compounds include full and partial esters of phosphorus acids, such as the mono-, di-, and tri esters of phosphoric acid, thiophosphoric acid, dithiophosphoric acid, trithiophosphoric acid and tetrathiophosphoric acid; the mono-, di-, and tri esters of phosphorous acid, thiophosphorous acid, dithiophosphorous acid and trithiophosphorous acid; the trihydrocarbyl phosphine oxides: the trihydrocarbyl phosphine sulfides; the mono- and dihydrocarbyl phosphonates, (RPO(OR')(OR") where R and R' are hydrocarbyl and R" is a hydrogen atom or a hydrocarbyl group), and their mono-, di- and trithio analogs; the mono- and dihydrocarbyl phosphonites, (RP(OR')(OR") where R and R' are hydrocarbyl and R" is a hydrogen atom or a hydrocarbyl group) and their mono- and dithio analogs; and the like. Thus, use can be made of such compounds as, for example, phosphorous acid ($H_3PO_3$, sometimes depicted as $H_2(HPO_3)$, and sometimes called ortho-phosphorous acid or phosphonic acid), phosphoric acid ($H_3PO_4$, sometimes called orthophosphoric acid), hypophosphoric acid ($H_4P_2O_6$), metaphosphoric acid ($HPO_3$), pyrophosphoric acid ($H_4P_2O_7$), hypophosphorous acid ($H_3PO_2$, sometimes called phosphinic acid), pyrophosphorous acid ($H_4P_2O_5$, sometimes called pyrophosphonic acid), phosphinous acid ($H_3PO$), tripolyphosphoric acid ($H_5P_3O_{10}$), tetrapolyphosphoric acid ($H_5P_4O_{13}$), trimetaphosphoric acid ($H_3P_3O_9$), phosphorus trioxide, phosphorus tetraoxide, phosphorus pentoxide, and the like. Partial or total sulfur analogs such as phosphorotetrathioic acid ($H_3PS_4$), phosphoromonothioic acid ($H_3PO_3S$), phosphorodithioic acid ($H_3PO_2S_2$), phosphorotrithioic acid ($H_3POS_3$), phosphorus sesquisulfide, phosphorus heptasulfide, and phosphorus pentasulfide ($P_2S_5$, sometimes referred to as $P_4S_{10}$) can also be used in forming dispersants for this disclosure. Also usable, though less preferred, are the inorganic phosphorus halide compounds such as $PCl_3$, $PBr_3$, $POCl_3$, $PSCl_3$, etc.

Likewise use can be made of such organic phosphorus compounds as mono-, di-, and triesters of phosphoric acid (e.g., trihydrocarbyl phosphates, dihydrocarbyl monoacid phosphates, monohydrocarbyl diacid phosphates, and mixtures thereof), mono-, di-, and triesters of phosphorous acid (e.g., trihydrocarbyl phosphites, dihydrocarbyl hydrogen phosphites, hydrocarbyl diacid phosphites, and mixtures thereof), esters of phosphonic acids (both "primary", $RP(O)(OR)_2$, and "secondary", $R_2P(O)(OR)$), esters of phosphinic acids, phosphonyl halides (e.g., $RP(O)Cl_2$ and $R_2P(O)Cl$), halophosphites (e.g., $(RO)PCl_2$ and $(RO)_2PCl$), halophosphates (e.g., $ROP(O)Cl_2$ and $(RO)_2P(O)Cl$, tertiary pyrophosphate esters (e.g., $(RO)_2P(O)-O-P(O)(OR)_2$), and the total or partial sulfur analogs of any of the foregoing organic phosphorus compounds, and the like wherein each hydrocarbyl group contains up to about 100 carbon atoms, preferably up to about 50 carbon atoms, more preferably up to about 24 carbon atoms, and most preferably up to about 12 carbon atoms. Also usable, although less preferred, are the halophosphine halides (e.g., hydrocarbyl phosphorus tetrahalides, dihydrocarbyl phosphorus trihalides, and trihydrocarbyl phosphorus dihalides), and the halophosphines (monohalophosphines and dihalophosphines).

The lubricants herein may include mixtures of one or more boronated and phosphorylated dispersants set forth above combined with non-boronated and non-phosphorylated dispersants as long as the dispersant requirements set forth above are still met in the lubricant.

Treat rates of the dispersant in the lubricant are also carefully controlled to achieve desired results. Typically, the dispersants described above are provided at a treat rate of 4.5 to 25 weight percent and, in other approaches, 4.5 to 12 weight percent, and in yet other approaches, 4.5 to 7.7 weight percent in the lubricant composition.

Detergent

The lubricant composition also includes one or more select detergents or mixtures thereof to provide specific amounts of metal and soap content to the lubricating composition. In one approach, the detergent is a metal-containing detergent, such as neutral to overbased detergents. Suitable detergent substrates include phenates, sulfur-containing phenates, sulfonates, calixarates, salixarates, salicylates, carboxylic acids, phosphorus acids, mono- and/or di-thiophosphoric acids, alkyl phenols, sulfur coupled alkyl phenol compounds and methylene bridged phenols. Suitable detergents and their methods of preparation are described in greater detail in numerous patent publications, including U.S. Patent No. 7,732,390, and references cited therein. In one approach, the detergents are neutral to overbased sulfonates, phenates, or carboxylates in the form of an alkali metal or alkaline earth metal salt. The detergents may be linear or branched, such as linear or branched sulfonates. Linear detergents are those that include a straight chain with no side chains attached thereto and typically include carbon atoms bonded only to one or two other carbon atoms. Branched detergents are those with one or more side chains attached to the molecule's backbone and may include carbon atoms bonded to one, two, three, or four other carbon atoms. In one embodiment the sulfonate detergent may be a predominantly linear alkylbenzenesulfonate detergent. In some embodiments the linear alkyl (or hydrocarbyl) group may be attached to the benzene ring anywhere along the linear chain of the alkyl group, but often in the 2, 3, or 4 position of the linear chain, and in some instances predominantly in the 2 position. In other embodiments, the alkyl (or hydrocarbyl) group may be branched, that is, formed from a branched olefin such as propylene or 1-butene or isobutene. Sulfonate detergents having a mixture of linear and branched alkyl groups may also be used.

The detergent substrate may be salted with an alkali or alkaline earth metal such as, but not limited to, calcium, magnesium, potassium, sodium, lithium, barium, or mixtures thereof. In some embodiments, the detergent is free of barium. A suitable detergent may include alkali or alkaline earth metal salts of petroleum sulfonic acids and long chain mono- or di-alkylarylsulfonic acids with the aryl group being one of benzyl, tolyl, and xylyl.

Overbased detergent additives are well known in the art and may be alkali or alkaline earth metal overbased detergent additives. Such detergent additives may be prepared by reacting a metal oxide or metal hydroxide with a substrate and carbon dioxide gas. The substrate is typically an acid, for example, an acid such as an aliphatic substituted sulfonic acid, an aliphatic substituted carboxylic acid, or an aliphatic substituted phenol. In general, the terminology "overbased" relates to metal salts, such as metal salts of sulfonates, carboxylates, and phenates, wherein the amount of metal present exceeds the stoichiometric amount. Such salts may have a conversion level in excess of 100% (i.e., they may comprise more than 100% of the theoretical amount of metal needed to convert the acid to its "normal," "neutral" salt). The expression "metal ratio," often abbreviated as MR, is used to designate the ratio of total chemical equivalents of metal in the overbased salt to chemical equivalents of the metal in a neutral salt according to known chemical reactivity and stoichiometry. In a normal or neutral salt, the metal ratio is one and in an overbased salt, the MR, is greater than one. Such salts are commonly referred to as overbased, hyperbased, or superbased salts and may be salts of organic sulfur acids, carboxylic acids, or phenols. The detergents may also exhibit a total base number (TBN) of 27 to 307 and, in other approaches, 200 to 307.

The amount of the detergent used provides less than 455 ppm of the metal to the lubricant composition. Higher levels of metal may result in failure of one or more of the anti-shudder durability or wear tests set forth herein. In other approaches, the detergent provides more than 0 to 281 ppm of metal to the lubricant composition. In yet other approaches, the detergent provides more than 0 to 100 ppm metal to the lubricant composition.

The detergent also provides select levels of soap content to the lubricant composition and the provided soap amounts are balanced with the level of metal such that if the metal is not within the desired ranges, then increasing soap content does not achieve desired results, which is discussed in more detail in the Examples herein. In one approach, the detergent provides 0.02 to 0.15 percent soap content to the final lubricating composition, such as sulfonate soap, phenate soap, and/or carboxylate soap. In other approaches, the detergent provides 0.02 to 0.1 percent soap, and in yet other approaches, 0.02 to 0.05 percent soap.

Soap content generally refers to the amount of neutral organic acid salt and reflects a detergent's cleansing ability, or detergency, and dirt suspending ability. The soap content can be determined by the following formula, using an exemplary calcium sulfonate detergent (represented by $RSO_3)_vCa_w(CO_3)_x(Oh)_y$ with v, w, x, and y denoting the number of sulfonate groups, the number of calcium atoms, the number of carbonate groups, and the number of hydroxyl groups respectively):

$$\text{soap content} \quad = \quad \frac{\text{formula weight of } [(RSO_3)_2Ca]}{\text{effective formula weight}} \; \times 100$$

Effective formula weight is the combined weight of all the atoms that make up the formula $(RSO_3)_vCa_w(CO_3)_x(OH)_y$ plus the weight of any other lubricant components. Further discussion on determining soap content can be found in FUELS AND LUBRICANTS HANDBOOK, TECHNOLOGY, PROPERTIES, PERFORMANCE, AND TESTING, George Totten, editor, ASTM International, 2003, relevant portions thereof are hereby incorporated herein by reference.

The treat rates of the detergent may be 0.08 weight percent to 1 weight percent based on the total weight of the lubricant composition. In some approaches, the metal-containing detergent is not boronated such that the boron in the lubricant is solely provided by the dispersant.

The selection of the dispersant and detergents noted above can be employed to achieve the desired friction properties of the lubricant while using conventional levels of other performance additives, such as friction and viscosity modifiers. In order to achieve lubricant performance for an automatic transmission, and in particular a dual-clutch transmission, the lubricants need to achieve a combination of minimum dynamic friction, a certain anti-shudder durability, and acceptable anti-wear rates. As noted above, these properties are achieved not by increasing or varying the levels of viscosity and/or friction modifiers, but instead by balancing a combination of multiple characteristics of the dispersant and detergent. Minimum dynamic friction and anti-shudder durability can be measured using a SAE No. 2 wet friction rig and a modified test based on JASO M348:2002 as described more fully in the Examples. The SAE No. 2 friction test is a stop time controlled, high energy launch friction test. A clutch is submerged in a temperature-controlled lubricant oil bath with a circulation pump moving the batch oil through the clutch interface. The clutch applies a force level at a fixed initial level and then automatically adjusts to control stop time as system performance changes. Data is acquired showing the changing relationship between $\mu d$ (dynamic friction) and applied force as well as the changing relationship between $\mu$-initial, $\mu d$, and $\mu 0$ (200 rpm). Desired lubricants herein have a minimum average dynamic friction ($\mu d$) of about 0.128 (average of $\mu d$ at 1400 rpm and with $\mu 0/\mu d$ <1.0), a minimum anti-shudder durability of at least about 8000 cycles with $\mu 0/\mu d$ <1.0, and an FZG anti-wear weight loss of no more than about 30 mg as measured using ASTM D4998.

The lubricants may also include other optional additives as needed for particular applications as long as the optional components do not affect the basic features of the dispersants and detergents noted above. Several common optional additives are noted herein.

Optional Additive Components

In addition to the base oils, dispersants, and detergents set forth above, the automatic transmission lubricating compositions herein may also include other additives to perform one or more functions required of a lubricating fluid. Further, one or more of the mentioned additives may be multi-functional and provide other functions in addition to or other than the function prescribed herein.

For example, the compositions herein may include one or more of at least one component selected from the group consisting of a friction modifier, an air expulsion additive, an antioxidant, a corrosion inhibitor, a foam inhibitor, a seal-swell agent, a viscosity index improver, an anti-rust agent, extreme pressure additives, and combinations thereof. Other performance additives may also include, in addition to those specified above, one or more of metal deactivators, ashless TBN boosters, demulsifiers, emulsifiers, pour point depressants, and mixtures thereof. Typically, fully-formulated lubricating oils will contain one or more of these performance additives. Examples of some common optional additive components are set forth below.

Friction Modifiers

The lubricating oil compositions herein may also optionally contain one or more friction modifiers. Suitable friction modifiers may comprise metal-containing and metal-free friction modifiers and may include, but are not limited to, imidazolines, amides, amines, succinimides, alkoxylated amines, alkoxylated ether amines, amine oxides, amidoamines, nitriles, betaines, quaternary amines, imines, amine salts, amino guanidines, alkanolamides, phosphonates, metal-containing compounds, glycerol esters, sulfurized fatty compounds and olefins, sunflower oil and other naturally occurring plant or animal oils, dicarboxylic acid esters, esters or partial esters of a polyol and one or more aliphatic or aromatic carboxylic acids, and the like.

Suitable friction modifiers may contain hydrocarbyl groups that are selected from straight chain, branched chain, or aromatic hydrocarbyl groups or mixtures thereof, and may be saturated or unsaturated. The hydrocarbyl groups may be composed of carbon and hydrogen or hetero atoms such as sulfur or oxygen. The hydrocarbyl groups may range from about 12 to about 25 carbon atoms. In an embodiment the friction modifier may be a long chain fatty acid ester. In an embodiment the long chain fatty acid ester may be a mono-ester, or a di-ester, or a (tri)glyceride. The friction modifier may be a long chain fatty amide, a long chain fatty ester, a long chain fatty epoxide derivative, or a long chain imidazoline.

Other suitable friction modifiers may include organic, ashless (metal-free), nitrogen-free organic friction modifiers. Such friction modifiers may include esters formed by reacting carboxylic acids and anhydrides with alkanols and generally include a polar terminal group (e.g. carboxyl or hydroxyl) covalently bonded to an oleophilic hydrocarbon chain. An example of an organic ashless nitrogen-free friction modifier is known generally as glycerol monooleate (GMO) which may contain mono-, di-, and tri-esters of oleic acid. Other suitable friction modifiers are described in U.S. Pat. No. 6,723,685.

Aminic friction modifiers may include amines or polyamines. Such compounds can have hydrocarbyl groups that are linear, either saturated or unsaturated, or a mixture thereof and may contain from about 12 to about 25 carbon atoms. Further examples of suitable friction modifiers include alkoxylated amines and alkoxylated ether amines. Such compounds may have hydrocarbyl groups that are linear, either saturated, unsaturated, or a mixture thereof. They may contain from about 12 to about 25 carbon atoms. Examples include ethoxylated amines and ethoxylated ether amines.

The amines and amides may be used as such or in the form of an adduct or reaction product with a boron compound such as a boric oxide, boron halide, metaborate, boric acid or a mono-, di- or tri-alkyl borate. Other suitable friction modifiers are described in U.S. Pat. No. 6,300,291.

### Antioxidants

The lubricating oil compositions herein also may optionally contain one or more antioxidants. Antioxidant compounds are known and include, for example, phenates, phenate sulfides, sulfurized olefins, phosphosulfurized terpenes, sulfurized esters, aromatic amines, alkylated diphenylamines (e.g., nonyl diphenylamine, di-nonyl diphenylamine, octyl diphenylamine, di-octyl diphenylamine), phenyl-alpha-naphthylamines, alkylated phenyl-alpha-naphthylamines, hindered non-aromatic amines, phenols, hindered phenols, oil-soluble molybdenum compounds, macromolecular antioxidants, or mixtures thereof. Antioxidants may be used alone or in combination.

### Corrosion Inhibitors

The automatic transmission lubricants may further include additional corrosion inhibitors (it should be noted that some of the other mentioned components may also have copper corrosion inhibition properties). Suitable additional inhibitors of copper corrosion include ether amines, polyethoxylated compounds such as ethoxylated amines and ethoxylated alcohols, imidazolines, monoalkyl and dialkyl thiadiazole, and the like

Thiazoles, triazoles and thiadiazoles may also be used in the lubricants. Examples include benzotriazole; tolyltriazole; octyltriazole; decyltriazole; dodecyltriazole; 2-mercaptobenzothiazole; 2,5-dimercapto-1,3,4-thiadiazole; 2-mercapto-5-hydrocarbylthio-1,3,4-thiadiazoles; and 2-mercapto-5-hydrocarbyldithio-1,3,4-thiadiazoles. The preferred compounds are the 1,3,4-thiadiazoles, especially the 2-hydrocarbyldithio-5-mercapto-1,3,4-dithiadiazoles, a number of which are available as articles of commerce.

### Foam Inhibitors/Anti Foam Agents

Anti-foam/Surfactant agents may also be included in a fluid according to the present invention. Various agents are known for such use. Especially preferred are copolymers of ethyl acrylate and hexyl ethyl acrylate, such as PC-1244, available from Solutia. Preferred are silicone fluids, such as 4% DCF. Mixtures of anti-foam agents are especially preferred.

### Seal-Swell Agents

The automatic transmission fluids of the present disclosure may further include seal swell agents. Seal swell agents such as esters, adipates, sebacates, azealates, phthalates, sulfones, alcohols, alkylbenzenes, substituted sulfolanes, aromatics, or mineral oils cause swelling of elastomeric materials used as seals in engines and automatic transmissions.

Alcohol-type seal swell agents are generally low volatility linear alkyl alcohols, such as decyl alcohol, tridecyl alcohol and tetradecyl alcohol. Alkylbenzenes useful as seal swell agents include dodecylbenzenes, tetradecylbenzenes, dinonyl-benzenes, di-(2-ethylhexyl)benzene, and the like. Substituted sulfolanes (e.g. those described in U.S. Pat. No. 4,029,588, incorporated herein by reference) are likewise useful as seal swell agents in compositions according to the present invention. Mineral oils useful as seal swell agents in the present invention include low viscosity mineral oils with high naphthenic or aromatic content. Aromatic seal swell agents include the commercially available Exxon Aromatic 200 ND seal swell agent. Commercially available examples of mineral oil seal swell agents include Exxon® Necton®-37 (FN 1380) and Exxon® Mineral Seal Oil (FN 3200).

Viscosity Modifiers

The lubricating oil compositions herein also may optionally contain one or more viscosity index improvers. Suitable viscosity index improvers may include polyolefins, olefin copolymers, ethylene/propylene copolymers, polyisobutenes, hydrogenated styrene-isoprene polymers, styrene/maleic ester copolymers, hydrogenated styrene/butadiene copolymers, hydrogenated isoprene polymers, alpha-olefin maleic anhydride copolymers, polymethacrylates, polyacrylates, polyalkyl styrenes, hydrogenated alkenyl aryl conjugated diene copolymers, or mixtures thereof. Viscosity index improvers may include star polymers and suitable examples are described in US Publication No. 2012/0101017 A1.

The lubricating oil compositions herein also may optionally contain one or more dispersant viscosity index improvers in addition to a viscosity index improver or in lieu of a viscosity index improver. Suitable dispersant viscosity index improvers may include functionalized polyolefins, for example, ethylene-propylene copolymers that have been functionalized with the reaction product of an acylating agent (such as maleic anhydride) and an amine; polymethacrylates functionalized with an amine, or esterified maleic anhydride-styrene copolymers reacted with an amine.

Anti-Rust Agents

Various known anti-rust agents or additives are known for use in transmission fluids, and are suitable for use in the fluids according to the present disclosure. Especially preferred are alkyl polyoxyalkylene ethers, such as Mazawet® 77, C-8 acids such as Neofat® 8, oxyalkyl amines such as Tomah PA-14, 3-decyloxypropylamine, and polyoxypropylene-polyoxyethylene block copolymers such as Pluronic® L-81.

Extreme Pressure Agents

The lubricating oil compositions herein also may optionally contain one or more extreme pressure agents. Extreme Pressure (EP) agents that are soluble in the oil include sulfur- and chlorosulfur-containing EP agents, chlorinated hydrocarbon EP agents and phosphorus EP agents. Examples of such EP agents include chlorinated waxes; organic sulfides and polysulfides such as dibenzyldisulfide, bis(chlorobenzyl) disulfide, dibutyl tetrasulfide, sulfurized methyl ester of oleic acid, sulfurized alkylphenol, sulfurized dipentene, sulfurized terpene, and sulfurized Diels-Alder adducts; phosphosulfurized hydrocarbons such as the reaction product of phosphorus sulfide with turpentine or methyl oleate; phosphorus esters such as the dihydrocarbyl and trihydrocarbyl phosphites, e.g., dibutyl phosphite, diheptyl phosphite, dicyclohexyl phosphite, pentylphenyl phosphite; dipentylphenyl phosphite, tridecyl phosphite, distearyl phosphite and polypropylene substituted phenyl phosphite; metal thiocarbamates such as zinc dioctyldithiocarbamate and barium heptylphenol diacid; amine salts of alkyl and dialkylphosphoric acids, including, for example, the amine salt of the reaction product of a dialkyldithiophosphoric acid with propylene oxide; and mixtures thereof.

Based on the above discussion, exemplary ranges of various lubricating composition components are set forth in Table 1 below.

Table 1: Transmission Lubricant Composition

| Component | Example Ranges, Weight Percent | Additional Example Ranges, Weight Percent |
|---|---|---|
| Dispersants | 4.5 to 25 | 4.5 to 12 |
| Detergents | 0.01 to 1 | 0.08 to 0.4 |
| Friction Modifiers | 0 to 6 | 0.005 to 4 |
| Viscosity Modifiers | 0 to 20 | 0 to 15 |
| Antioxidants | 0 to 2 | 0.05 to 1 |
| Rust inhibitors | 0 to 1 | 0.005 to 0.5 |
| Corrosion Inhibitors | 0 to 1.2 | 0.005 to 0.8 |

(continued)

| Component | Example Ranges, Weight Percent | Additional Example Ranges, Weight Percent |
|---|---|---|
| Anti-wear agents | 0 to 5 | 0 to 3 |
| Seal Swell Agents | 0 to 20 | 0 to 10 |
| Antifoam Agents | 0 to 1 | 0.005 to 0.8 |
| Extreme pressure agents | 0 to 2 | 0 to 1 |
| Lubricating Base Oils | Balance | Balance |

The lubricants herein are particularly suited for dual clutch transmissions, such as those with a wet friction clutch. Suitable wet friction clutch transmissions typically have a plurality of clutch plates (such as at least three and may be up to six), such as those with a cellulose-based friction lining and each having an associated steel reaction plate packed together in a housing between an application piston and a release spring. Such a transmission may also include other common components such as waved or cushion plates, spacer plates, and/or retention rings. The wet friction clutch is operated in a conventional manner by the selective application of fluid pressure using the lubricating transmissions fluid herein.

A better understanding of the present disclosure and its many advantages may be obtained from the following examples. Those skilled in the art will readily understand that variations of the components, methods, steps, and devices described in these examples can be used. Unless noted otherwise, all percentages, ratios, and parts noted in this disclosure including the examples are by weight. As used herein, the term "percent by weight", unless expressly stated otherwise, means the percentage the recited component represents to the weight of the entire composition.

EXAMPLES

EXAMPLE 1

Exemplary inventive and comparative lubricants were prepared to demonstrate the importance of the dispersant treat rates, PIB molecular weights, boron levels, ratios of boron to phosphorus, and ratios of boron to nitrogen. These examples demonstrate that varying such dispersant characteristics outside of the proposed ranges therefor leads to at least unacceptable anti-shudder durability or wear rate. A lubricant was prepared including a boronated and phosphorylated N-substituted polyisobutylene succinimide dispersant with the characteristics set forth in Tables 2A and 2B below and blended with conventional lubricant additives as set forth in Table 1. The dispersant included tetraethylene pentaamine (TEPA) as the substituent between the succinimide moieties.

Table 2A: Inventive Dispersants and Treat Rates in Lubricants

|  | I1 | I2 | I3 | I4 |
|---|---|---|---|---|
| Molecular weight of PIB | 2300 | 2300 | 2300 | 2300 |
| N in dispersant, % | 0.76 | 0.77 | 0.77 | 0.77 |
| Dispersant Treat rate, % | 7.7 | 7.7 | 23.1 | 4.5 |
| N from Dispersant, ppm | 585 | 593 | 1779 | 347 |
| Boron in Dispersant, % | 0.07 | 0.15 | 0.15 | 0.15 |
| P in Dispersant, % | 0.33 | 0.35 | 0.35 | 0.35 |
| B/P weight ratio | 0.21 | 0.43 | 0.43 | 0.43 |
| B/N weight ratio | 0.09 | 0.19 | 0.19 | 0.19 |
| B in finished fluid, ppm | 58 | 124 | 371 | 72 |

Table 2B: Comparative Dispersants and Treat Rates in Lubricants

| | C1 | C2 | C3 | C4 | C5 | C6 | C7 |
|---|---|---|---|---|---|---|---|
| Molecular weight of PIB | 2300 | 1300 | 950 | 950 | 2300 | 2300 | 1300 |
| N in dispersant, % | 0.77 | 1.45 | 1.64 | 1.64 | 0.75 | 0.78 | 1.45 |
| Dispersant Treat rate, % | 2.567 | 4.09 | 1.85 | 3.7 | 7.7 | 7.7 | 0.89 |
| N from Dispersant, ppm | 198 | 593 | 303 | 607 | 578 | 601 | 129 |
| Boron in Dispersant, % | 0.15 | 1.3 | 0.35 | 0.35 | 0 | 0.44 | 1.3 |
| P in Dispersant, % | 0.35 | 0 | 0.76 | 0.76 | 0.33 | 0.34 | 0 |
| B/P weight ratio | 0.43 | - | 0.46 | 0.46 | 0 | 1.29 | - |
| B/N weight ratio | 0.19 | 0.90 | 0.21 | 0.21 | 0.00 | 0.56 | 0.90 |
| B in finished fluid, ppm | 39 | 557 | 70 | 130 | 0 | 395 | 111 |

In Tables 2A and 2B, the molecular weight of PIB is the number average molecular weight of the PIB substituent using gel permeation chromatography (GPC) with polystyrene (number average molecular weight of 180 to 18,000) as the reference. N refers to nitrogen, P refers to phosphorous, and B refers to Boron. The detergent in this Example was a linear sulfonate having a TBN of 307, about 11.9 weight percent metal, and 25 weight percent soap, which provided about 93 ppm metal to the finished fluid and about 0.02 percent soap to the finished fluid.

Each of the transmission lubricants of Tables 2A and 2B also included the same amounts of, and the same detergents, friction modifiers, viscosity modifier, antioxidant, rust inhibitor, corrosion inhibitor, seal swell agent, antifoam agents, extreme pressure agent, and lubricating oils. The amounts of these additional components were as set forth in Table 1 above. Thus, the only variations between the oils of Tables 2A and 2B were the differences set forth in Tables 2A-2B.

Table 3 below provides the friction and anti-wear test results of the various inventive and comparative lubricants of Tables 2A and 2B. Anti-wear characteristics are determined using an FZG anti-wear test according to ASTM D 4998. Friction properties are determined using a modified JASO M348:2002 test using a SAE#2 wet friction rig and the process described below. Acceptable lubricants for automatic transmissions, and in particular, dual clutch transmissions, require no more than about 30mg of weight loss using the FZG anti-wear test, an anti-shudder durability of at least 8000 cycles with $\mu0/\mu d$ <1.0 ($\mu0$ is friction at 200 rpm and $\mu d$ is friction at 1400) and a minimum average dynamic friction at 1400 rpm of 0.128 before is $\mu0/\mu d$ >1.0. Inventive lubricants passed all three performance criteria. Comparative lubricants failed one or more of these tests. Comparative samples C1 and C7 were not further tested for anti-shudder durability because the anti-wear results were almost double the desired minimum. Failures are highlighted in the Table below.

Table 3: Test Results

| Lubricant | Anti-Wear Mg | Anti-Shudder Durability, cycles with μ0/μd <1.0 | Average Dynamic Friction, 1400 rpm |
|---|---|---|---|
| I1 | 2 | 9200 | 0.134 |
| I2 | 11 | >10,000 | 0.135 |
| I3 | 5 | >10,000 | 0.145 |
| I4 | 13 | >10,000 | 0.131 |
| C1 | 54 | - | - |
| C2 | 28 | 1225 | 0.12 |
| C3 | 10 | >10,000 | 0.122 |
| C4 | 16 | >10,000 | 0.125 |
| C5 | 9 | 2400 | 0.128 |
| C6 | 41 | 3150 | 0.116 |
| C7 | 56 | - | - |

As shown in Tables 2A, 2B, and 3 above, even a small deviation from the ranges of the present invention v dispersant treat rates, PIB molecular weight, boron levels, boron to phosphorous ratio, or boron to nitrogen ratio results in one or more of the desired lubricant parameters failing thereby rendering the lubricant unsuitable for automatic transmissions, and in particular, dual clutch transmissions.

Test Conditions

The test procedure was a modified version of JASO M348:2002 that measured anti-shudder durability utilizing a SAE No.2 wet friction rig to evaluate the durability of a clutch system. FIG. 1 depicts, in schematic fashion, an exemplary SAE No. 2 machine used for the testing herein.

In FIG. 1, the depicted SAE No. 2 combination wet-friction rig includes a high speed AC motor **H** with shaft extensions on both ends. The inertia end was flanged to a flywheel **J** to provide the desired total energy for each dynamic engagement. The clutch end (B, C and E) extended into the test head A where it was adapted to drive the splined hub for the clutch (B and C). The Test Head **A,** was supported on the shaft through bearings to allow rotation independent of the shaft. Frictional force was measured through a load cell **G** at a given temperature, load, and sliding speed. The load was applied by means of a pneumatic piston **F.** The particular test oil under evaluation was circulated by pump **J** from the bottom of the Test Head **A,** though heat exchanger **K,** by means of hoses **L,** returning to the Test Head **A** through the hollow drive shaft to be sprayed through holes in the splined hub for the clutch.

The dimensions of the friction disk **E,** loaded between the two steel plates **C,** were as follows: Material Type: Borg Warner 6100; Groove: Parallel (grooves fully parallel at approx. 20% area); Inner Diameter (Di) 120.5 mm; Outer Diameter (Do) 146.0 mm; Effective Mean Radius (Rm) 66.8 mm; Gross Area [per side, ungrooved] (AG) 5,337 mm2.

Industry standard steel separator plates were used as the mating plates. Each of the two steel plates were drilled radially with 0.61 mm holes with an outer edge chamfered to a depth at the Effective Mean Radius of the steel separator plate. A type J thermocouple was inserted in each plate so that the tip of the thermocouple was positioned at the bottom of the bore. The steel separator plates were cleaned with heptane. Plates were soaked in the tested lubricant for fifteen (15) minutes and assembled in the SAE No. 2 head with the rotating friction disk located between the fixed steel plates (Note the Figure). Oil temperature Thermocouple **TC3** was installed 1 mm from the outside of the steel separator plates at the 7 o'clock position in the test head **A.** Spacer **B** was installed to give $0.8\pm.2$ mm of clutch pack clearance. The test oil circulation pump **J,** heat exchanger **K** and hoses **L** were cleaned by flushing 1L of unadditized base stock oil through them. After the base oil flush, 500ml of test lubricant was flushed through the same. The hoses **L** were connected to the test head **A** and 1L of test oil was charged into the head assembly through the ATF reservoir. Flywheels **I** were installed on the rig to give a total inertia of 1.27 kg*m2.

To conduct the evaluation, the test oil circulation pump **J** was set to flow about $4.5 \pm 0.5$ L/min. With no load applied to the clutch and the motor **H** running at 100 rpm, the test oil was heated to $60\pm3$ °C. When the oil temperature had stabilized, the test began with 20,000 sequential dynamic engagements whose conditions are described in Table 4. The test began with an applied load of 0.76 MPa and adjusted the applied load to control stop time. Data was collected for each test cycle. The values for friction ($\mu$), were calculated for each cycle and used to determine the performance and durability of the clutch system.

Table 4: Test Conditions:

| Test Oil Temperature | $90 \pm 3$ºC |
| --- | --- |
| Stabilization Period, $T_1$ | AC Motor ramps to $2800 \pm 20$ rpm and stabilizes for $5 \pm 0.5$s |
| Coast Period, $T_2$ | 0 |
| Apply Period, $T_3$ | Load is applied $\pm 0.5\%$ for $5 \pm 0.1$s with an apply rate of 1840 kPa/s |
| Dwell Period, $T_4$ | Load is off and speed is 0 for an additional $4 \pm 0.5$s |
| Stop Time, $\Phi$ | $4.0 \pm 0.05$s |

EXAMPLE 2

Additional exemplary inventive and comparative lubricants were prepared to demonstrate the importance of the amount of the metal-containing detergent when combined with the selected dispersant treat rate, PIB molecular weight, boron level, ratio of boron to phosphorus, and ratio of boron to nitrogen. This further Example demonstrates that the metal content and soap content of the detergent is also important for maintaining acceptable anti-shudder durability and wear rate in the context of automatic transmission lubricants. A lubricant was prepared including a boronated and phosphorylated N-substituted polyisobutylene succinimide dispersant combined with neutral to overbased detergents that provide varying amounts of metal and soap contents to the final lubricant. As shown by the results below in Table 6 (failures highlighted), the compositions wherein the amount of the detergent usedprovided a metal content of less than 455 ppm and a soap content of 0.02 to about 0.15 percent to the lubricant composition achieved the desired results.

Each of the transmission lubricants of Table 5A (inventive) and 5B (comparative) below also included the same amounts and same dispersant, friction modifiers, a viscosity modifier, antioxidant, rust inhibitor, corrosion inhibitor, seal swell agent, antifoam agents, extreme pressure agent, and lubricating oils. The amounts of these additional components were as set forth in Table 1 above. Thus, the only variation between the oils of Tables 5A and 5B were the detergent features as set forth in those tables. The dispersant used in this Example had a number average molecular weight of the PIB substituent of 2300, about 0.77 weight percent nitrogen, a boron to phosphorus ratio of 0.43, a ratio of boron to nitrogen of 0.19,and delivered to the finished fluid about 593 ppm nitrogen, about 0.15 weight percent boron, and about 0.35 weight percent phosphorus, The finished fluid contained about 124 ppm of boron.

Table 5A: Inventive Detergents

|  | I5 | I6 | I7 | I8 | I9 |
|---|---|---|---|---|---|
| Detergent type | Linear Sulfonate | Linear, Sulfonate | Sulfonate | Phenate | Branched Sulfonate |
| TBN of Detergent | 307 | 307 | 27.5 | 230 | 300 |
| Detergent Treat rate, % | 0.08 | 0.24 | 0.37 | 0.103 | 0.083 |
| Metal in Detergent, % | 11.9 | 11.9 | 2.6 | 9.25 | 11.6 |
| Metal in finished fluid, ppm | 93 | 281 | 105 | 96 | 97 |
| Soap content in detergent, % | 25 | 25 | 40 | 33 | 29 |
| Soap content in finished fluid, % | 0.02 | 0.06 | 0.15 | 0.03 | 0.02 |

Table 5B: Comparative Detergents

|  | C8 | C9 | C10 | C11 |
|---|---|---|---|---|
| Detergent type | None | Sulfonate | Sulfonate | Sulfonate |
| TBN of Detergent | - | 307 | 307 | 307 |
| Detergent Treat rate, % | 0 | 0.4 | 0.6 | 0.8 |
| Metal in Detergent, % | 0 | 11.9 | 11.9 | 11.9 |
| Metal in finished fluid, ppm | 0 | 455 | 682.5 | 942 |
| Soap content in detergent, % | 0 | 25 | 25 | 25 |
| Soap content in finished fluid, % | 0 | 0.1 | 0.15 | 0.2 |

Table 6 below shows results of the anti-wear and anti-shudder durability tests determined using the same procedures as Example 1 above. Comparative sample C11 was not tested for anti-shudder durability in view of the anti-wear results being almost double the desired minimum. The results demonstrate the effects of metal content and soap content provided by the detergent in the final lubricant on the desired lubricant properties. Deviation from the invention results in one or more of the key lubricant performance criteria failing.

Table 6: Detergent Results

| Lubricant | Anti-Wear mg | Anti-Shudder Durability, cycles with μ0/μd <1.0 | Average Dynamic Friction, 1400 rpm |
|---|---|---|---|
| I5 | 11 | >10,000 | 0.135 |
| I6 | 15 | >10,000 | 0.131 |
| I7 | 27 | >10,000 | 0.129 |
| I8 | 28 | >10,000 | 0.132 |
| I9 | 10 | >10,000 | 0.133 |
| C8 | 14 | 8950 | 0.123 |
| C9 | 8 | >10,000 | 0.123 |
| C10 | 15 | >10,000 | 0.126 |
| C11 | 70 | - | - |

EXAMPLE 3

Another experiment was conducted to determine if the level of sulfur in a thiadiazole corrosion inhibitor further affected lubricant properties. Table 7 identifies a lubricant that varies the level of a thiadizole containing corrosion inhibitor. In the tested lubricants of Table 7, each composition evaluated included the same amounts and the same dispersant, detergent, friction modifiers, a viscosity modifier, an antioxidant, rust inhibitor, a seal swell agent, antifoam agents, extreme pressure agent, and base lubricating oils. The amounts of these other components are as set forth in Table 1. The dispersant used in these Examples was described in Example 2 and the detergent was described in Example 1. Thus, the only variation between the lubricants of Table 7 was the in the amount of corrosion inhibitor, and accordingly, the level of sulfur in the tested lubricants. As shown by the test results, all lubricants of Table 7 passed the friction and anti-wear testing (conducted consistent with Example 1), which indicates that the levels of sulfur provided by the corrosion inhibitor did not impact the results. It is expected that similar results would be achieved with corrosion inhibitor treat rates of less than about 1% and, in particular, treat rates of corrosion inhibitor of about 0.005% to about 0.5%.

Table 7: Corrosion Inhibitor

| Fluid | I10 | I11 | I12 | I13 |
|---|---|---|---|---|
| Dispersant, % | 7.7 | 7.7 | 7.7 | 7.7 |
| Detergent, % | 0.08 | 0.08 | 0.08 | 0.08 |
| Corrosion Inhibitor, treat rate, % | 0.16 | 0.32 | 0.48 | 0.005 |
| Sulfur in Corrosion inhibitor, % | 35 | 35 | 35 | 35 |
| **Average Dynamic Friction,** 1400 rpm | 0.135 | 0.129 | 0.13 | - |
| **Anti-Shudder Durability,** cycles with μ0/μd <1.0 | >10,000 | 8925 | >10,000 | - |
| FZG Anti-Wear, Weight Loss, mg | 11 | 12 | 19 | 26 |

In alternative embodiments, a transmission lubricant composition is described including a major amount of a lubricating oil; 4.5 to 25 weight percent of a boronated and phosphorylated N-substituted polyisobutylene succinimide dispersant having a number average molecular weight of the polyisobutylene substituent greater than 1300 to 2300 as determined by gel permeation chromatography using polystyrene as the reference and a viscosity of the polyisobutylene substituent at 100°C of 2100 to 2700 cSt, 44 to 371 ppm boron, a ratio of boron to phosphorus of 0.21 to 0.46, and a ratio of boron to nitrogen of 0.09 to 0.19; and a metal containing detergent providing less than 455 ppm of metal to the transmission lubricant composition and delivering a soap content of 0.02 to 0.15 weight percent to the transmission lubricant composition.

The composition above may further include one or more of the following wherein the transmission lubricant composition has a Brookfield viscosity at -40°C of not more than 15,000 cP; wherein the major amount of a lubricating oil is selected from the group consisting of a Group II base oil, a Group III base oil and/or a Group IV base oil as well as mixtures thereof; wherein the transmission lubricant composition includes 4.5 to 7.7 weight percent of the boronated and phosphorylated N-substituted polyisobutylene succinimide dispersant; wherein the metal containing detergent is a neutral to overbased sulfonate, phenate, or carboxylate with an alkali metal or alkaline earth metal salt; wherein the metal containing detergent is a linear or branched sulfonate; wherein the metal containing detergent provides 0 to 281 ppm of the metal; further comprising 0.08 to 1 weight percent of the metal containing detergent; wherein the metal containing detergent is not boronated; and/or further comprising at least one component selected from the group consisting of a friction modifier, an air expulsion additive, an antioxidant, a corrosion inhibitor, a foam inhibitor, a seal-swell agent, a viscosity index improver, anti-rust agent, an extreme pressure additive, and mixtures thereof.

In yet another embodiment, a method of lubricating a transmission is described comprising supplying thereto a lubricant composition. The method includes lubricating a transmission with a lubricant composition, the lubricant composition including a mixture of a major amount of a lubricating oil; 4.5 to 25 weight percent of a boronated and phosphorylated N-substituted polyisobutylene succinimide dispersant having a number average molecular weight of the polyisobutylene substituent greater than 1300 to 2300 as determined by gel permeation chromatography using polystyrene as the reference and a viscosity of the polyisobutylene substituent at 100°C of 2100 to 2700 cST, 44 to 371 ppm boron, a ratio of boron to phosphorus of 0.21 to 0.46, and a ratio of boron to nitrogen of 0.09 to 0.19; and a metal containing detergent providing less than 455 ppm of a metal to the lubricant composition and delivering a soap content of 0.02 to 0.15 weight percent to the lubricant composition.

The method above may further include one or more of the following wherein the lubricant composition has a Brookfield viscosity at -40°C of not more than 15,000 cP; wherein the major amount of a lubricating oil is selected from the group consisting of a Group II base oil, a Group III base oil and/or a Group IV base oil as well as mixtures thereof; wherein the lubricant composition includes 4.5 to 7.7 weight percent of the boronated and phosphorylated N-substituted polyisobutylene succinimide dispersant; wherein the metal containing detergent is a neutral to overbased sulfonate, phenate, or carboxylate with an alkali metal or alkaline earth metal salt; wherein the metal containing detergent is a linear or branched sulfonate; wherein the metal containing detergent provides 0 to 281 ppm of the metal; further comprising 0.08 to 1 weight percent of the metal containing detergent; wherein the metal containing detergent is not boronated; and/or wherein the lubricant composition further includes at least one component selected from the group consisting of a friction modifier, an air expulsion additive, an antioxidant, a corrosion inhibitor, a foam inhibitor, a seal-swell agent, a viscosity index improver, anti-rust agent, an extreme pressure additive, and mixtures thereof.

In another embodiment, a transmission is described. The transmission includes a wet-clutch friction disk; and a lubricating composition including a major amount of a base oil and 4.5 to 25 weight percent of a boronated and phosphorylated N-substituted polyisobutylene succinimide dispersant having a number average molecular weight of the polyisobutylene substituent greater than 1300 to 2300 as determined by gel permeation chromatography using polystyrene as the reference and a viscosity of the polyisobutylene substituent at 100°C of 2100 to 2700 cST, 44 to 371 ppm boron, a ratio of boron to phosphorus of 0.21 to 0.46, and a ratio of boron to nitrogen of 0.09 to 0.19; and a metal containing detergent providing less than 455 ppm of a metal to the lubricant composition and delivering a soap content of 0.02 to 0.15 weight percent to the lubricant composition.

The transmission above may further includes one or more of the following wherein the lubricating composition has a Brookfield viscosity at -40°C of not more than 15,000 cP; wherein the major amount of a base oil is selected from the group consisting of a Group II base oil, a Group III base oil and/or a Group IV base oil as well as mixtures thereof; wherein the lubricating composition includes 4.5 to 7.7 weight percent of the boronated and phosphorylated N-substituted polyisobutylene succinimide dispersant; wherein the metal containing detergent is a neutral to overbased sulfonate, phenate, or carboxylate with an alkali metal or alkaline earth metal salt; wherein the metal containing detergent is a linear or branched sulfonate; wherein the metal containing detergent provides 0 to 281 ppm of the metal; further comprising 0.08 to 1 weight percent of the metal containing detergent; wherein the metal containing detergent is not boronated; and/or wherein the lubricating composition further includes at least one component selected from the group consisting of a friction modifier, an air expulsion additive, an antioxidant, a corrosion inhibitor, a foam inhibitor, a seal-swell agent, a viscosity index improver, anti-rust agent, an extreme pressure additive, and mixtures thereof.

It will be understood that various changes in the details, materials, and arrangements of formulations and ingredients, which have been herein described and illustrated in order to explain the nature of the method, compositions, and transmissions, may be made by those skilled in the art within the principle and scope of the description and claims herein. It is intended that the specification and examples be considered as exemplary only, with a true scope of the disclosure being indicated by the following claims.

Other embodiments of the present disclosure will be apparent to those skilled in the art from consideration of the specification and practice of the embodiments disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification may be modified by the term "about". Accordingly, unless indicated to the contrary, the numerical parameters set forth in the specification are approximations that may vary depending upon the desired properties sought to be obtained by the present disclosure. At the very least, each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

The patentees do not intend to dedicate any disclosed embodiments to the public.

It is to be understood that each component, compound, substituent or parameter disclosed herein is to be interpreted as being disclosed for use alone or in combination with one or more of each and every other component, compound, substituent or parameter disclosed herein.

It is also to be understood that each amount/value or range of amounts/values for each component, compound, substituent or parameter disclosed herein is to be interpreted as also being disclosed in combination with each amount/value or range of amounts/values disclosed for any other component(s), compounds(s), substituent(s) or parameter(s) disclosed herein and that any combination of amounts/values or ranges of amounts/values for two or more component(s), compounds(s), substituent(s) or parameters disclosed herein are thus also disclosed in combination with each other for the purposes of this description.

It is further understood that each range disclosed herein is to be interpreted as a disclosure of each specific value within the disclosed range that has the same number of significant digits. Thus, a range of from 1-4 is to be interpreted as an express disclosure of the values 1, 2, 3 and 4.

It is further understood that each lower limit of each range disclosed herein is to be interpreted as disclosed in combination with each upper limit of each range and each specific value within each range disclosed herein for the same component, compounds, substituent or parameter. Thus, this disclosure to be interpreted as a disclosure of all ranges derived by combining each lower limit of each range with each upper limit of each range or with each specific value within each range, or by combining each upper limit of each range with each specific value within each range.

Furthermore, specific amounts/values of a component, compound, substituent or parameter disclosed in the description or an example is to be interpreted as a disclosure of either a lower or an upper limit of a range and thus can be combined with any other lower or upper limit of a range or specific amount/value for the same component, compound, substituent or parameter disclosed elsewhere in the application to form a range for that component, compound, substituent or parameter.

**Claims**

1.  A transmission lubricant composition comprising:

    a greater than 50 weight percent of a lubricating oil;
    4.5 to 25 weight percent of a boronated and phosphorylated N-substituted polyisobutylene succinimide dispersant having a number average molecular weight of the polyisobutylene substituent greater than 1300 up to 2300 as determined by gel permeation chromatography using polystyrene as the reference, a ratio of boron to phosphorus of 0.21 to 0.46, and a ratio of boron to nitrogen of 0.09 to 0.19; and
    an amount of a metal-containing detergent providing less than 455 ppm of metal to the transmission lubricant composition and delivering a soap content of 0.02 to 0.15 weight percent to the transmission lubricant composition, and
    wherein the lubricant composition contains 44 to 371 ppm boron.

2.  The composition of claim 1, wherein the transmission lubricant composition has a Brookfield viscosity at -40°C of not more than 15,000 cP.

3.  The composition of any one of claims 1-2, wherein the greater than 50 weight percent of a lubricating oil is selected from the group consisting of a Group II base oil, a Group III base oil and/or a Group IV base oil as well as mixtures thereof.

4.  The composition of any one of claims 1-3, wherein the transmission lubricant composition includes 4.5 to 7.7 weight percent of the boronated and phosphorylated N-substituted polyisobutylene succinimide dispersant.

5.  The composition of any one of claims 1-4, wherein the metal-containing detergent is a neutral to overbased sulfonate, phenate, or carboxylate in a form of an alkali metal or alkaline earth metal salt.

6.  The composition of claim 5, wherein the metal-containing detergent is a linear or branched sulfonate.

7.  The composition of any one of claims 1-6, wherein the metal-containing detergent provides more than 0 to 281 ppm of the metal to the lubricant composition.

8. The composition of any one of claims 1-7, wherein the composition comprises from 0.08 to 1 weight percent of the metal-containing detergent.

9. The composition of any one of claims 1-8, wherein the metal-containing detergent is not boronated.

10. The composition of any one of claims 1-9, further comprising at least one component selected from a friction modifier, an air expulsion additive, an antioxidant, a corrosion inhibitor, a foam inhibitor, a seal-swell agent, a viscosity index improver, an anti-rust agent, an extreme pressure additive, and mixtures thereof.

11. The composition of any one of claims 1-10, wherein the polyisobutylene employed to make the dispersant has a viscosity at 100°C of 2100 to 2700 cST, as measured by ASTM D445.

12. A method of lubricating a transmission, the method comprising:

lubricating the transmission with a lubricant composition as claimed in any one of claims 1-11.

13. The method of claim 12, wherein the transmission includes a wet-clutch friction disk.

14. A transmission comprising:

a wet-clutch friction disk; and
a lubricating composition including as claimed in any one of claims 1-11.

15. Use of a lubricating composition as claimed in any one of claims 1-11 for lubrication of a transmission comprising a wet-clutch friction disk.


**Patentansprüche**

1. Eine Getriebeschmiermittelzusammensetzung umfassend:

einen Anteil von mehr als 50 Gewichtsprozent eines Schmieröls;
4,5 bis 25 Gewichtsprozent eines boronierten und phosphorylierten N-substituierten Polyisobutylen-Succinimid-Dispergiermittels mit einem zahlenmittleren Molekulargewicht des Polyisobutylen-Substituenten von mehr als 1300 bis 2300, bestimmt durch Gelpermeationschromatographie unter Verwendung von Polystyrol als Referenz, einem Boron-Phosphor-Verhältnis von 0,21 zu 0,46 und einem Boron-Stickstoff-Verhältnis von 0,09 zu 0,19; und eine Menge eines metallhaltigen Detergens, welche der Getriebeschmiermittelzusammensetzung weniger als 455 ppm Metall bereitstellt und welche der Getriebeschmiermittelzusammensetzung einen Seifengehalt von 0,02 bis 0,15 Gewichtsprozent zuführt, und
wobei die Schmiermittelzusammensetzung von 44 bis 371 ppm Boron enthält.

2. Die Zusammensetzung gemäß Anspruch 1, wobei die Getriebeschmiermittelzusammensetzung bei -40 °C eine Brookfield-Viskosität von höchstens 15.000 cP aufweist.

3. Die Zusammensetzung gemäß irgendeinem der Ansprüche 1-2, wobei der Anteil von mehr als 50 Gewichtsprozent eines Schmieröls ausgewählt wird aus der Gruppe bestehend aus einem Gruppe-II-Grundöl, einem Gruppe-III-Grundöl und/oder einem Gruppe-IV-Grundöl sowie Mischungen daraus.

4. Die Zusammensetzung gemäß irgendeinem der Ansprüche 1-3, wobei die Getriebeschmiermittelzusammensetzung 4,5 bis 7,7 Gewichtsprozent des boronierten und phosphorylierten N-substituierten Polyisobutylen-Succinimid-Dispergiermittels enthält.

5. Die Zusammensetzung gemäß irgendeinem der Ansprüche 1-4, wobei das metallhaltige Detergens ein neutrales bis überbasisches Sulfonat, Phenat oder Carboxylat in einer Form von einem Alkalimetall- oder Erdalkalimetallsalz ist.

6. Die Zusammensetzung gemäß Anspruch 5, wobei das metallhaltige Detergens ein geradkettiges oder verzweigtes Sulfonat ist.

**7.** Die Zusammensetzung gemäß irgendeinem der Ansprüche 1-6, wobei das metallhaltige Detergens der Schmiermittelzusammensetzung mehr als 0 bis 281 ppm Metall bereitstellt.

**8.** Die Zusammensetzung gemäß irgendeinem der Ansprüche 1-7, wobei die Zusammensetzung von 0,08 bis 1 Gewichtsprozent des metallhaltigen Detergens umfasst.

**9.** Die Zusammensetzung gemäß irgendeinem der Ansprüche 1-8, wobei das metallhaltige Detergens nicht boroniert ist.

**10.** Die Zusammensetzung gemäß irgendeinem der Ansprüche 1-9 ferner umfassend mindestens eine Komponente ausgewählt unter einem Reibungsminderer, einem Entlüftungsadditiv, einem Antioxidans, einem Korrosionsinhibitor, einem Schauminhibitor, einem Dichtungsschwellmittel, einem Viskositätsindexverbesserer, einem Rostschutzmittel, einem Extremdruckadditiv und Mischungen daraus.

**11.** Die Zusammensetzung gemäß irgendeinem der Ansprüche 1-10, wobei das Polyisobutylen, welches zur Herstellung des Dispergiermittels verwendet wird, gemäß Messung nach ASTM D445 bei 100 °C eine Viskosität von 2100 bis 2700 cST aufweist.

**12.** Ein Verfahren zur Schmierung eines Getriebes, wobei das Verfahren Folgendes umfasst:

Schmierung des Getriebes mit einer Schmiermittelzusammensetzung gemäß irgendeinem der Ansprüche 1-11.

**13.** Das Verfahren gemäß Anspruch 12, wobei das Getriebe eine Nasskupplungs-Reibscheibe beinhaltet.

**14.** Ein Getriebe umfassend:

eine Nasskupplungs-Reibscheibe; und
eine Schmiermittelzusammensetzung u. a. gemäß irgendeinem der Ansprüche 1-11.

**15.** Anwendung einer Schmiermittelzusammensetzung gemäß irgendeinem der Ansprüche 1-11 für die Schmierung eines Getriebes, welches eine Nasskupplungs-Reibscheibe umfasst.

**Revendications**

**1.** Composition de lubrifiant pour transmission comprenant :

plus de 50 pour cent en poids d'une huile lubrifiante ;
de 4,5 à 25 pour cent en poids d'un dispersant polyisobutylène succinimide N-substitué phosphorylé et boré ayant une masse moléculaire moyenne en nombre du substituant polyisobutylène supérieure à 1300 jusqu'à 2300 telle que déterminée par chromatographie par perméation de gel en utilisant du polystyrène comme référence, un rapport du bore au phosphore allant de 0,21 à 0,46 et un rapport du bore à l'azote allant de 0,09 à 0,19 ; et
une quantité de détergent contenant du métal apportant moins de 445 ppm de métal à la composition de lubrifiant pour transmission et apportant une teneur en savon de 0,02 à 0,15 pour cent en poids à la composition de lubrifiant pour transmission, et
la composition de lubrifiant contenant de 44 à 371 ppm de bore.

**2.** Composition selon la revendication 1, la composition de lubrifiant pour transmission ayant une viscosité Brookfield à -40 °C ne dépassant pas 15 000 cP.

**3.** Composition selon l'une quelconque des revendications 1 à 2, dans laquelle les plus de 50 pour cent en poids d'huile lubrifiante sont choisis dans le groupe constitué d'une huile de base de groupe II, d'une huile de base de groupe III et/ou d'une huile de base de groupe IV ainsi que de mélanges de celles-ci.

**4.** Composition selon l'une quelconque des revendications 1 à 3, la composition de lubrifiant pour transmission comprenant de 4,5 à 7,7 pour cent en poids du dispersant polyisobutylène succinimide N-substitué phosphorylé et boré.

**5.** Composition selon l'une quelconque des revendications 1 à 4, dans laquelle le détergent contenant du métal est un sulfonate, phénate ou carboxylate allant de neutre à surbasé sous la forme d'un sel de métal alcalin ou de métal alcalino-terreux.

**6.** Composition selon la revendication 5, dans laquelle le détergent contenant du métal est un sulfonate linéaire ou ramifié.

**7.** Composition selon l'une quelconque des revendications 1 à 6, dans laquelle le détergent contenant du métal apporte de plus de 0 à 281 ppm du métal à la composition de lubrifiant.

**8.** Composition selon l'une quelconque des revendications 1 à 7, la composition comprenant de 0,08 à 1 pour cent en poids du détergent contenant du métal.

**9.** Composition selon l'une quelconque des revendications 1 à 8, dans laquelle le détergent contenant du métal n'est pas boré.

**10.** Composition selon l'une quelconque des revendications 1 à 9, comprenant en outre au moins un composant choisi parmi un modificateur de friction, un additif pour chasser l'air, un antioxydant, un inhibiteur de corrosion, un agent antimousse, un agent de gonflement de joint, un agent améliorant l'indice de viscosité, un agent antirouille, un additif ultra-haute pression, et des mélanges de ceux-ci.

**11.** Composition selon l'une quelconque des revendications 1 à 10, dans laquelle le polyisobutylène employé pour fabriquer le dispersant a une viscosité à 100 °C de 2100 à 2700 cST, telle que mesurée par l'ASTM D445.

**12.** Procédé de lubrification d'une transmission, le procédé comprenant :

la lubrification de la transmission avec une composition de lubrifiant telle que revendiquée dans l'une quelconque des revendications 1 à 11.

**13.** Procédé selon la revendication 12, dans lequel la transmission comprend un disque de friction d'embrayage à bain d'huile.

**14.** Transmission comprenant ;
un disque de friction d'embrayage à bain d'huile ; et
une composition de lubrifiant y compris telle que revendiquée dans l'une quelconque des revendications 1 à 11.

**15.** Utilisation d'une composition lubrifiante telle que revendiquée dans l'une quelconque des revendications 1 à 11 pour la lubrification d'une transmission comprenant un disque de friction d'embrayage à bain d'huile.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7897696 B
- US 4234435 A
- US 7732390 B
- US 6723685 B
- US 6300291 B
- US 4029588 A
- US 20120101017 A1